Europäisches Patentamt

**European Patent Office**

**Office européen des brevets**

(11) Numéro de publication: **0 351 264**
**A1**

# DEMANDE DE BREVET EUROPEEN

(21) Numéro de dépôt: **89401742.5**

(22) Date de dépôt: **20.06.89**

(51) Int. Cl.⁵: **H 04 N 9/12**

(30) Priorité: **08.07.88 FR 8809304**

(43) Date de publication de la demande:
**17.01.90 Bulletin 90/03**

(84) Etats contractants désignés: **DE GB IT NL**

(71) Demandeur: **THOMSON-CSF**
**51, Esplanade du Général de Gaulle**
**F-92800 Puteaux (FR)**

(72) Inventeur: **Bouguignat, Jérôme**
**THOMSON-CSF SCP - Cédex 67**
**F-92045 Paris la Défense (FR)**

**Migozzi, Jean-Blaise**
**THOMSON-CSF SCP - Cédex 67**
**F-92045 Paris la Défense (FR)**

(74) Mandataire: **Courtellemont, Alain et al**
**THOMSON-CSF SCPI**
**F-92045 PARIS LA DEFENSE CEDEX 67 (FR)**

(54) **Système de visualisation d'image couleur utilisant un mélangeur optique à fibres ordonnées.**

(57) Le mélangeur optique permet, grâce à des fibres optiques, une superposition précise, dans un plan d'observation (AECF), d'images élémentaires identiques de chrominances distinctes.

Il comporte n, où n est un entier supérieur à 1, dispositifs de visualisation (1, 2,3) pour former n images élémentaires monochromes de chrominances différentes sur n écrans (10, 20 et 30) à partir d'une même image d'origine, et un dispositif mélangeur optique constitué de fibres optiques qui peuvent être disposées en nappes. Ces fibres sont ordonnées pour former des groupes de n fibres dans lesquels les fibres d'un même groupe aboutissent, à leur première extrémité, respectivement sur les n écrans, en des points des images élémentaires correspondant au même point de l'image d'origine et aboutissent, à leur seconde extrémité, dans le plan d'observation, sensiblement en un point correspondant au point considéré, pour le groupe, de l'image d'origine.

L'invention s'applique à la visualisation d'images couleur à haute définition.

FIG.1

EP 0 351 264 A1

**Description**

**Système de visualisation d'image couleur utilisant un mélangeur optique à fibres ordonnées.**

La présente invention concerne un système de visualisation d'image couleur utilisant un mélangeur optique à fibres ordonnées.

Pour élaborer des images couleur très haute définition on peut utiliser trois tubes à rayons cathodiques monochromes haute résolution, chacun produisant l'image à visualiser dans une des trois couleurs fondamentales Rouge (R), Vert (V), ou Bleu (B). Un problème se pose ensuite pour superposer optiquement avec suffisamment de précision les images produites dans les chrominances différentes.

Une solution connue consiste à utiliser des lames partiellement réfléchissantes ou des lames dichroïques. Les grosses difficultés rencontrées concernent la superposition exacte des points correspondant à chaque image, car l'alignement s'avère délicat.

Le but de l'invention est de remédier à ces difficultés en utilisant des faisceaux de fibres optiques ordonnées.

Selon l'invention un système de visualisation d'image couleur comportant : n dispositifs de visualisation, où n est un entier supérieur à 1, munis respectivement de n écrans à balayage électronique pour former, à partir d'une même image d'origine, n images élémentaires monochromes de n chrominances distinctes, respectivement sur les n écrans ; et un dispositif mélangeur optique pour mélanger les n images élémentaires et former une image couleur résultante dans un plan d'observation, est caractérisé en ce que le dispositif mélangeur est constitué de fibres optiques ordonnées pour former des groupes de n fibres, les fibres d'un même groupe aboutissant à leur première extrémité, respectivement sur les n écrans en des points des images élémentaires correspondant au même point de l'image d'origine et aboutissant, à leur seconde extrémité, dans le plan d'observation, sensiblement en un point qui est le point de l'image résultante à visualiser correspondant au point considéré, pour le groupe, de l'image d'origine.

Les particularités et avantages de l'invention apparaîtront dans la description qui suit à l'aide des figures annexées qui représentent :

- Fig.1, un schéma simplifié du procédé mélangeur optique utilisé conformément à l'invention ;

- Fig.2, une illustration des arrangements de fibres dans le plan de l'image couleur visualisée ;

- Fig.3, le même arrangement de fibres en distinguant les chrominances R, V et B ;

- Fig.4, 5 et 6, les arrangements de fibres correspondant respectivement à la transmission des chrominances R, V et B en l'autre extrémité des nappes, du côté écrans de visualisation des images élémentaires R, V et B ;

- Fig.7 et 8, des schémas relatifs à un montage du mélangeur optique à l'aide des trois réseaux de nappes R, V et B entrelacés en une extrémité pour former l'image couleur plane résultante ;

- Fig.9, un schéma d'un premier montage de l'extrémité des nappes d'une voie en regard de l'écran associé et du balayage ligne par ligne incliné couvrant la zone utile à visualiser ;

- Fig.10, un schéma d'un deuxième montage de l'extrémité des nappes d'une voie vis-à-vis de l'écran associé, permettant de réaliser un balayage ligne par ligne horizontal couvrant la zone utile à visualiser ;

- Fig.11, un bloc diagramme général d'un système de visualisation d'image conforme à l'invention.

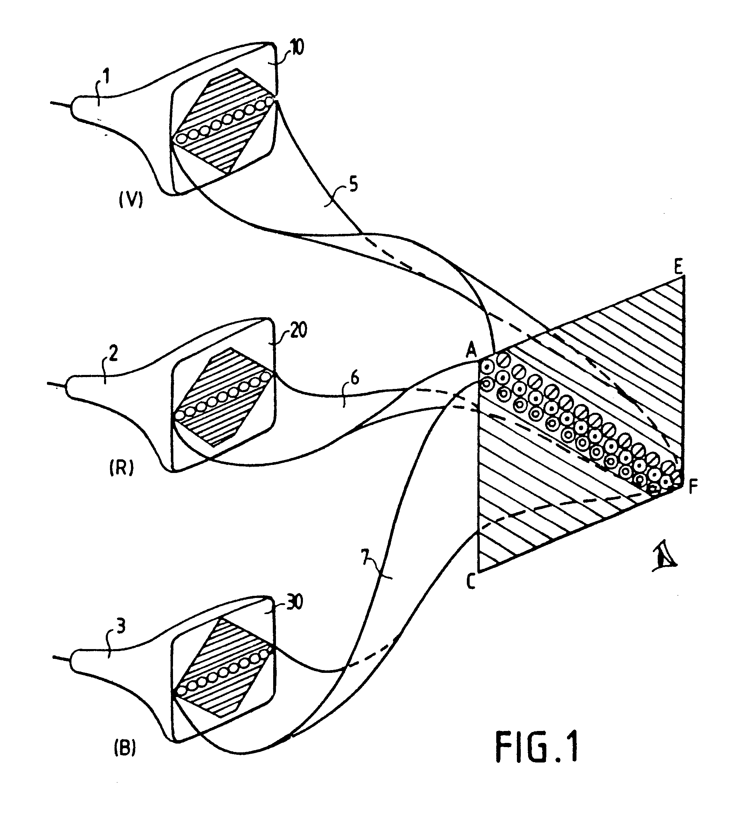

En se reportant à la figure 1, on distingue trois dispositifs de visualisation d'image, par exemple des tubes à rayons cathodiques 1, 2 et 3, utilisés respectivement pour produire une image de chrominance donnée différente pour chacun d'eux. Dans cet exemple à trois tubes, les chrominances correspondent aux teintes fondamentales rouge R, vert V et bleu B. Cet exemple n'est toutefois pas à considérer comme limitatif, l'invention s'applique également, mais avec un moindre intérêt, au mélange de seulement deux chrominances élaborées à partir de deux dispositifs de visualisations.

Le dispositif mélangeur optique utilisé pour mélanger les trois images élémentaires monochromes et former une image couleur résultante dans un plan d'observation délimité par une aire rectangulaire conventionnelle AECF est constitué de faisceaux de fibres optiques ordonnées réalisés sous forme de nappes planes parallèles et juxtaposées dans le plan d'observation en une première de leurs extrémités. Chaque nappe correspond à une disposition dans le plan de la nappe de fibres optiques parallèles espacées à un pas déterminé et formant une ligne de points en chaque extrémité. La seconde extrémité des nappes est arrangée de la même façon en les répartissant en regard et à proximité des écrans 10, 20 et 30 des tubes cathodiques respectifs pour capter les images visualisées correspondantes R, V et B. Pour simplifier la figure, on a représenté qu'une seule nappe partant de chaque tube, en l'occurrence une nappe centrale respectivement référencée 5, 6 et 7. Ces nappes en leur première extrémité aboutissent dans le plan d'observation, où elles sont arrangées en étant inclinées par rapport aux côtés du rectangle AECF.

On considère a priori, pour simplifier l'exposé, que la figure AECF est un carré. Les nappes sont arrangées parallèlement à l'une des diagonales, par exemple la diagonale AF de direction D1. Dans le carré AECF on dispose successivement une nappe R, une nappe V, une nappe B et ainsi de suite.

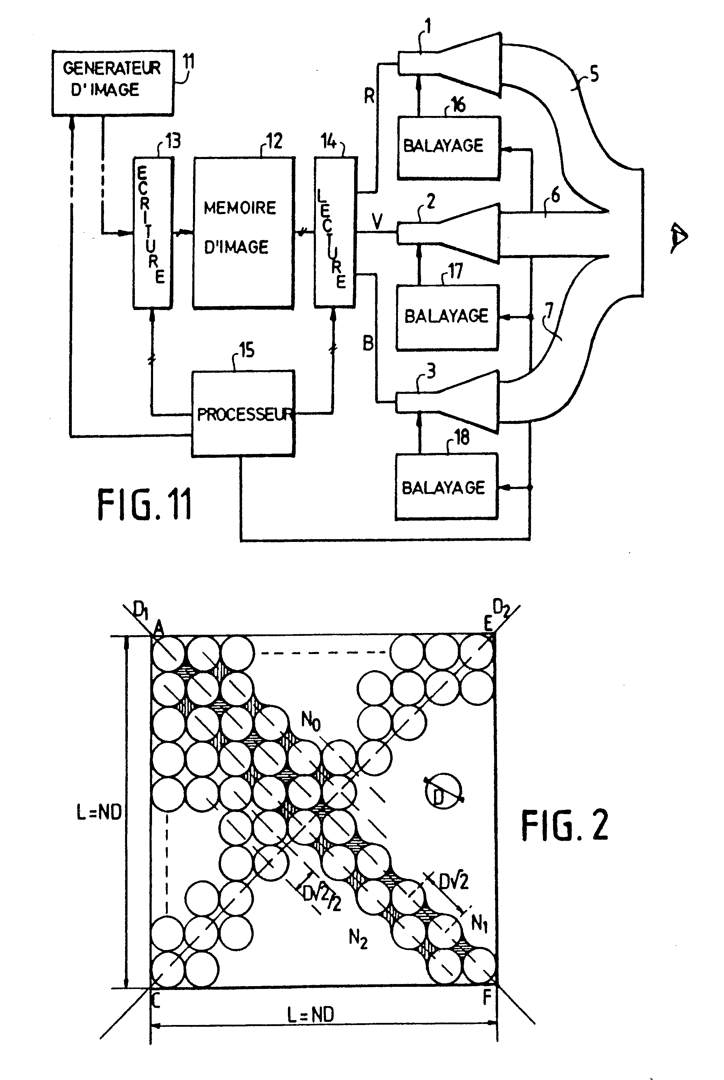

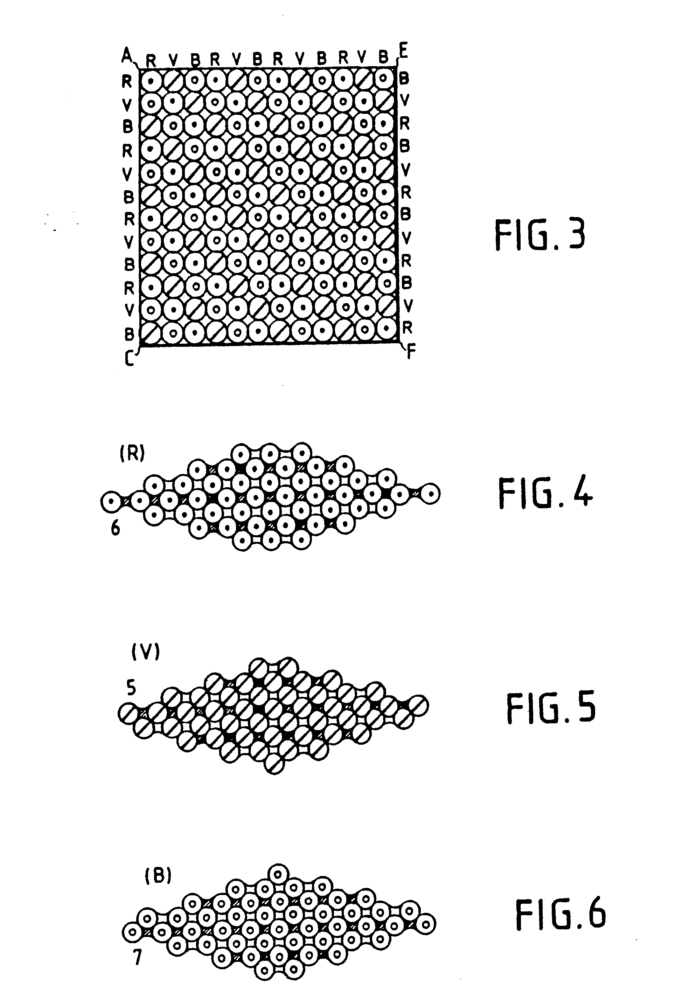

Ce rangement est illustré de manière détaillée sur la figure 3 avec l'indication des chrominances respectives RVB. La figure 2 matérialise la succession des nappes N1, N2, etc. et leur implantation géométrique dans la forme carrée. Les fibres des nappes superposées sont distantes selon la direction D2 de la diagonale CE d'un pas égal à $D/\sqrt{2}$, D étant le diamètre des fibres. Les fibres sont au pas de $D\sqrt{2}$ selon l'autre direction diagonale D1. Le côté du carré a pour valeur L = ND délimitant une image globale de N lignes ayant chacune N points résultant de N fibres de diamètre D. Les nappes rouges R sont sélectionnées et regroupées en leur extrémité opposée en face de l'écran 20 selon la représentation figure 4.

Les figures 5 et 6 correspondent de même aux regroupements en leur autre extrémité des nappes vertes V et bleues B devant les écrans respectifs 10 et 30.

D'une manière générale, si l'on appelle "j" le rang d'une nappe de chrominance donnée elle se retrouvera ensuite du côté image couleur visualisée dans le plan AECF au rang $j+3$, $j+6$, etc. Les nappes de rang $j+1$, $j+4$, $j+7$ correspondent à une deuxième chrominance et les nappes de rang $j+2$, $j+5$, $j+8$, etc. correspondent à la troisième chrominance.

On se rend compte d'après les figures 3 à 6 que le nombre de fibres utiles par nappe, au fur et à mesure qu'on s'éloigne de la diagonale AF, va en diminuant aussi bien vers l'extrémité B que vers l'extrémité C, ceci de manière symétrique pour la teinte rouge (figure 4) et selon des dispositions respectivement symétriques pour les deux autres teintes (figures 5 et 6). On se rend compte que la réalisation de nappes successives ayant un nombre différent de fibres peut s'avérer délicate à réaliser et l'ensemble du montage d'exécution malaisée.

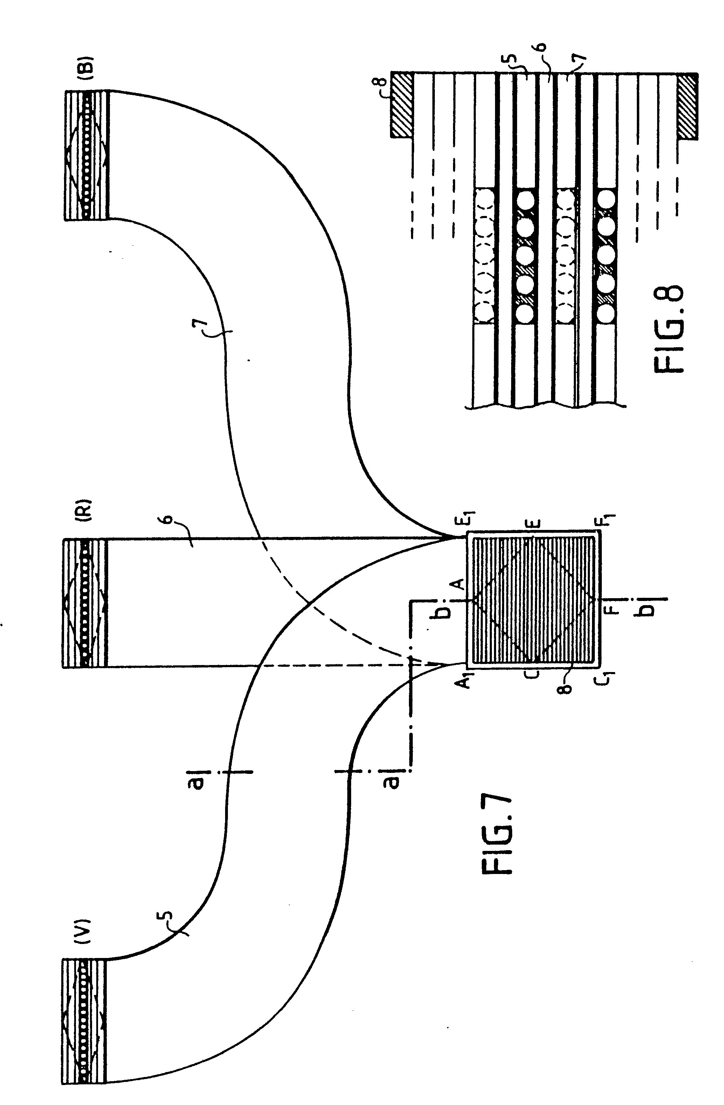

Pour remédier à ces inconvénients, une solution préférentielle représentée figures 7 et 8 consiste à utiliser des nappes identiques pour les trois images et donc ayant le même nombre de fibres chacune, quitte à ne pas utiliser pour la transmission lumineuse la totalité des fibres composant ces nappes comme il apparaît sur les figures suivantes 9 et 10. Ainsi, la seconde extrémité des nappes, celles ainsi dénommées en regard des écrans, consiste en une surface rectangulaire plus facilement intégrable au niveau de l'écran du tube ou du dispositif de visualisation. De même, côté image à visualiser on obtient les premières extrémités réunies dans un carré global A1E1C1F1 dont le côté est égal à la diagonale de l'image AECF à visualiser (figure 7). La figure 8 représente selon la coupe partielle aa-bb la répartition superposée des nappes pour former la première extrémité et le plan d'observation. Un montant 8 tel une bride ou un cadre, maintient ces nappes en leur première extrémité. On se rend compte d'après la figure de détail 8 qu'avec une longueur suffisante disponible des nappes après leur enchevêtrement terminal on peut faire tourner le cadre 8 de maintien de l'ensemble pour orienter la surface de visualisation AECF de manière satisfaisante pour l'observation de l'image couleur.

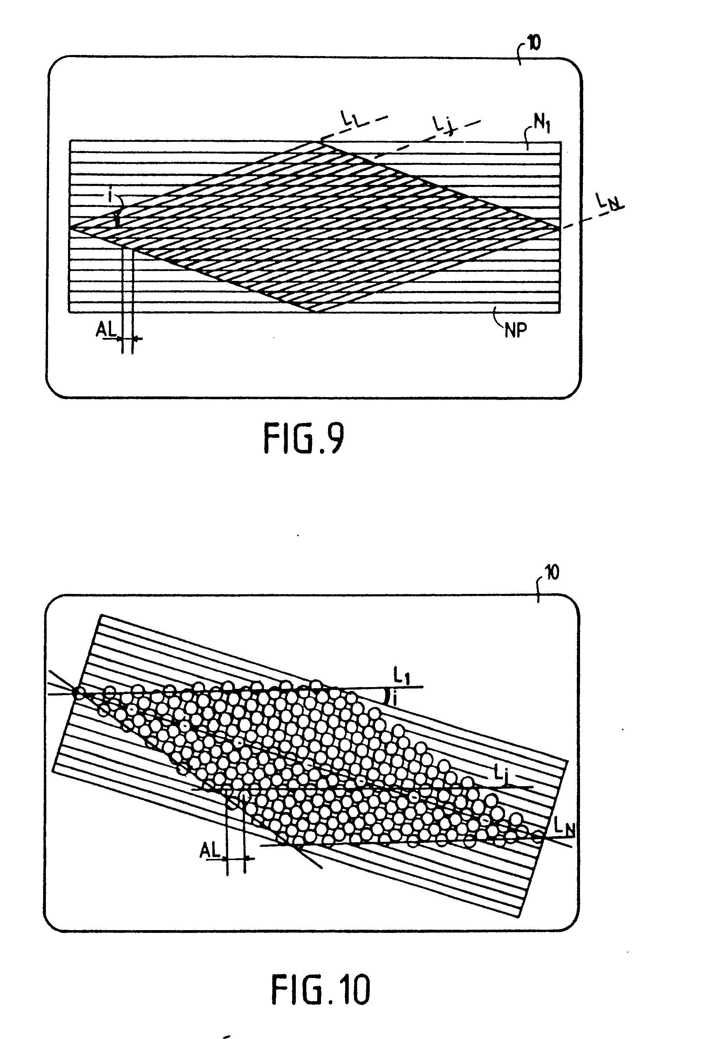

La figure 9 représente un premier arrangement de nappes en leur seconde extrémité en face d'un écran de visualisation. Les nappes N1 à NP sont disposées parallèlement aux côtés horizontaux de l'écran et le balayage ligne par ligne de l'image est représenté par les lignes L1 à LN ; ce balayage est incliné d'un certain angle "i" par rapport aux directions des nappes et il se trouve décalé d'une quantité AL à chaque ligne pour couvrir la zone utile correspondant à la répartition de fibres (figures 4, 5 et 6) destinée à la transmission vers le plan d'observation de l'image élémentaire monochrome visualisée. Cette zone utile est un parallélogramme.

La figure 10 présente un deuxième arrangement suivant lequel on a orienté différemment les nappes par rapport aux côtés de l'écran de visualisation de manière à conserver la direction horizontale pour le balayage ligne par ligne L1 à LN de l'image.

Dans le cas envisagé de réalisation d'une image carrée comportant N lignes de N fibres optiques, les images élémentaires ont une forme de losange dont les diagonales comportent respectivement l'une, N fibres ou N - 1 fibres et l'autre, 2N/3 fibres. Il en résulte que le côté du losange a pour valeur $N.\sqrt{13/36}$ ce qui représente, connaissant le diamètre pour valeur $N.\sqrt{13/36}$ ce qui représente, connaissant le diamètre et la disposition respective des fibres, la longueur utile à balayer selon chaque ligne.

Ainsi, avec un rangement des fibres par nappes en diagonale, l'image carrée finale comporte N x N fibres en un format L x L. Sur la diagonale D1 de l'image finale il y a N fibres et chaque image initiale a une diagonale principale de N ou N - 1 fibres. Il y a 2N nappes juxtaposées suivant la direction D2 de l'image visualisée, toutes les parties utiles de nappes ayant une longueur variable étant adressée alternativement à chacune des trois images. Il y a donc 2N /3 nappes de chaque image initiale. L'image de départ est un parallélogramme avec un rapport 2/3 entre les deux diagonales. L'image initiale est produite par un balayage télévision suivant le côté du parallélogramme à visualiser et il faut tracer $\sqrt{13/36}.N$ lignes de chacune $\sqrt{13\ /36}.N$ points soit environ 0,6 N lignes x 0,6 N points. Les effets de moiré sont limités car l'angle entre les deux directions principales du balayage et de la transmission est de l'ordre de 33°7 dans le cas d'une image carrée finale. Dans le cas d'une image rectangulaire les nappes seront également inclinées par rapport aux côtés AB,CD du rectangle.

La figure 11 représente sous forme diagramme simplifié un système de visualisation d'image conforme à l'invention où l'on retrouve les tubes cathodiques 1, 2 et 3 et les nappes 5,6,7. Les autres éléments indiqués consistent en un générateur d'image 11 et une mémoire d'image 12 avec ses circuits associés d'adressage à l'écriture 13 et à la lecture 14 cet ensemble étant géré par un dispositif processeur 15 qui commande également les circuits de balayage 16, 17 et 18 des tubes.

Dans l'exemple de réalisation décrit précédemment, notamment à l'aide des figures 4,5 et 6 relatives aux arrangements des fibres en extrémité des nappes du côté des écrans de visualisation monochrome 10, 20 et 30, ainsi qu'aux du balayage ligne par ligne correspondant effectué sur les écrans, on se rend compte que le rapport d'anamorphose est de 1/3 en ses extrémités.

Pour accroître ce rapport et améliorer la solution décrite, on modifie la structure des nappes de la manière suivante. Les fibres optiques qui sont espacées à la distance D.$\sqrt{2}$ l'une de l'autre du côté plan de visualisation AECF sont progressivement rapprochées pour se trouver juxtaposées côte à côte à l'extrémité qui fait face à l'écran. La dimension de la nappe médiane, la plus grande, se trouve ainsi réduite dans le rapport 1/$\sqrt{2}$ et la dimension correspondante du losange d'autant. Selon l'autre direction diagonale du losange correspondant à la superposition des nappes, celles-ci au lieu d'être imbriquées comme représenté à très faible distance l'une de l'autre D/$\sqrt{2}$, sont disposées parallèlement à une distance D, d'où un accroissement de facteur $\sqrt{2}$. Finalement, le rapport d'anamorphose devient 2/3 de cette façon au lieu de 1/3.

**Revendications**

1. Système de visualisation d'image couleur comportant :
- n dispositifs de visualisation, où n est un entier supérieur à 1, munis respectivement de n écrans à balayage électronique pour former, à partir d'une même image d'origine, n images élémentaires monochromes de n chrominances distinctes, respectivement sur les n écrans ;
- et un dispositif mélangeur optique pour mélanger les n images élémentaires et former une image couleur résultante dans un plan d'observation (AECF), caractérisé en ce que le dispositif mélangeur est constitué de fibres optiques ordonnées pour former des groupes de n fibres, les fibres d'un même groupe aboutissant à leur première extrémité, respectivement sur les n écrans (10, 20, 30) en des points des images élémentaires correspondant au même point de l'image d'origine et aboutissant, à leur seconde extrémité, dans le plan d'observation, sensiblement en un point qui est le point de l'image résultante à visualiser correspondant au point considéré, pour le groupe, de l'image d'origine.

2. Système selon la revendication 1, caractérisé en ce que les fibres sont ordonnées en nappes, les fibres d'une même nappe aboutissant, à leur première extrémité, sur un des n écrans qui est le même pour toutes les fibres de la nappe considérée.

3. Système selon la revendication 2 dans lequel l'image d'origine est en forme de rectangle, caractérisé en ce que l'orientation des nappes à la première extrémité de leurs fibres est inclinée d'une valeur constante par rapport aux côtés du rectangle.

4. Système selon la revendications 3, caractérisé en ce que les nappes sont disposées à la suite, à la seconde extrémité de leurs fibres, selon un arrangement dans lequel les nappes de-rang 0, 1 et 2 modulo 3 aboutissent, à la première extrémité de leurs fibres, respectivement sur les n = 3 écrans (10, 20, 30).

5. Système selon l'une quelconque des revendications 2 à 4, caractérisé en ce que les nappes sont identiques.

6. Système selon la revendication 5, caractérisé en ce que le balayage ligne par ligne de chaque écran est incliné par rapport à la direction des nappes et décalé d'une ligne à la suivante pour couvrir une zone utile ayant la forme d'un parallélogramme correspondant à l'étendue de l'image élémentaire à transmettre par les fibres.

7. Système selon l'une quelconque des revendications 2 à 6, caractérisé en ce que les nappes, à la seconde extrémité de leurs fibres, sont imbriquées et disposées à D/$\sqrt{2}$ l'une de l'autre, D étant le diamètre des fibres, les fibres elles-mêmes étant espacées à D x $\sqrt{2}$ l'une de l'autre dans chaque nappe, et les nappes, à la première extrémité de leurs fibres, étant superposées à une distance D l'une de l'autre et les fibres juxtaposées également à une distance D.

FIG.1

FIG. 11

FIG. 2

FIG.3

FIG.4

FIG.5

FIG.6

FIG.7

FIG.8

FIG.9

FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 247 755 (W.P. SIEGMUND) <br> * Colonne 5, ligne 6 - colonne 6, ligne 41 * <br><br> ----- | 1 | H 04 N 9/12 |

|  |  |  | **DOMAINES TECHNIQUES RECHERCHES (Int. Cl.5)** |
|---|---|---|---|
|  |  |  | H 04 N <br> G 02 B |

**Le présent rapport a été établi pour toutes les revendications**

| Lieu de la recherche | Date d'achèvement de la recherche | Examinateur |
|---|---|---|
| LA HAYE | 10-10-1989 | PIGNIEZ T.J.P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)